# EUROPÄISCHE PATENTSCHRIFT

(11) **EP 1 994 347 B1**
(45) Veröffentlichungstag und Bekanntmachung des Hinweises auf die Patenterteilung: **25.05.2011**
(21) Anmeldenummer: 07712528.4
(22) Anmeldetag: 15.03.2007
(51) Int. Cl.: F27B 7/36, C04B 7/44

(54) **HERSTELLUNG VON ZEMENTKLINKER**
PRODUCTION OF CEMENT CLINKER
PRODUCTION DE CLINKER

(30) Priorität: 15.03.2006 DE 102006012301
(43) Veröffentlichungstag der Anmeldung: 26.11.2008
(73) Patentinhaber: Cement and Mining Processing (CMP) AG, 06846 Dessau (DE)
(72) Erfinder: KROHN, Reiner, 06844 Dessau (DE); SCHUSTER, Frank, 06847 Dessau (DE)
(74) Vertreter: Gritschneder, Martin
(86) Internationale Anmeldenummer: PCT/EP2007/052448
(87) Internationale Veröffentlichungsnummer: WO 2007/104785

(56) Entgegenhaltungen:
- WO-A-01/66233
- GB-A- 2 050 584
- STEFFEN GAJEWSKI: "Theorethische und betriebliche Untersuchung feurerungstechnischer Massnahmen zur NOx-Minderung an Drehofenanlagen der Zementindustrie" 1999, VEREIN DEUTSCHER ZEMENTWERKE EV , DÜSSELDORF , XP002460169 in der Anmeldung erwähnt Seite 28 Tabelle 4.2.1

## Beschreibung

### Technisches Gebiet

Die Erfindung betrifft ein Verfahren zur Herstellung von Zementklinker aus Rohmehl im Trockenverfahren, mit einer Rohmühle und einer Drehofenanlage, die einen Rohmehlvorwärmer, einen Drehofen und einen Rostkühler aufweist. Dem Drehofen wird mittels eines Primärluftventilators Primärluft zugeführt, und die Abgase des Drehofens werden dem Rohmehlvorwärmer zugeführt. Die Anlage ist in einem Verbundbetrieb mit Rohmehlmahlung und in einem Direktbetrieb ohne Rohmehlmahlung betreibbar, wobei im Verbundbetrieb die Drehofenanlage und die Rohmühle im Gasverbund arbeiten, indem das Heißgas des Rohmehlvorwärmers der Rohmühle zugeführt wird und danach als Abgas einen Entstaubungsfilter passiert und durch einen Abgasschornstein ins Freie abgegeben wird, und wobei im Direktbetrieb das Heißgas des Rohmehlvorwärmers an der Rohmühle vorbei zum Entstaubungsfilter und Abgasschornstein geleitet wird.

Im Allgemeinen weist die Drehofenanlage ferner einen Kalzinator auf und werden die Abgase des Drehofens und ein Teil der Heißgase aus dem Rostklinkerkühler als Tertiärluft dem Kalzinator zugeführt.

Im Trockenverfahren wird Zementklinker in einem thermischen Prozess aus Rohmehl hergestellt. Das Rohmehl wird dabei erwärmt, restgetrocknet, kalziniert, zu Klinker umgewandelt und dann gekühlt. Die Energiezuführung für die Stoffumwandlung in dieser Anlage erfolgt durch Brennstoffzuführung in den Kalzinator und in den Drehofen. Der Klinkerbrand im Drehofen erfolgt bei Temperaturen von 1450 bis 1500 °C. Dadurch entsteht im Drehofen Hochtemperatur- und Brennstoff-NOₓ.

### Stand der Technik

Aus der Veröffentlichung "Theoretische und betriebliche Untersuchung feuerungstechnischer Maßnahmen zur NOₓ-Minderung an Drehofenanlagen der Zementindustrie" von Steffen Gajewski, Ennigerloh, Düsseldorf: Verein Deutscher Zementwerke, VDZ, 1999 - (Schriftenreihe der Zementindustrie 60) - ISBN 3-00-004620-8 ist es bekannt, dass eine Verminderung des Sauerstoffangebotes in der Drehofenflamme, der eigentlichen Verbrennungszone, die Bildung von NOₓ reduziert und dass der Betrieb der Drehofenanlage dadurch kaum beeinträchtigt wird, da der Ausbrand des in der Flamme entstehenden Kohlenmonoxids durch die zur Verfügung stehende restliche Verbrennungsstrecke sichergestellt ist. Möglichkeiten zur Verminderung des Sauerstoffangebotes sind dabei die Rückführung des Abgases der Rohmahlanlage bei Verbundbetrieb und des Abgases des Rohmehlvorwärmers bei Direktbetrieb.

Aus GB 2 050 584, die als nächster Stand der Technik angesehen wird, ist eine Staubfeuerung für einen Ofen zur Herstellung von Zementklinker bekannt, bei dem Ofenabgas als Primärluft eingesetzt wird, wobei dem Drehofen das Abgas aus dem Abgasschornstein zu 0 bis 100% als Primärluft zugeführt wird.

### Darstellung der Erfindung

### Technische Aufgabe

Die Erfindung, wie sie im Anspruch 1 angegeben ist, löst die Aufgabe , bei einem Verfahren der eingangs genannten Art zur Herstellung von Zementklinker in beiden Betriebsarten eine Reduzierung des NOₓ-Ausstoßes zu erzielen.

### Technische Lösung

### Vorteilhafte Wirkungen

In einer praktischen Ausführung wird bei Direktbetrieb (ohne Rohmehlmahlung) gekühltes und entstaubtes Rohmehlvorwärmer-Abgas und bei Verbundbetrieb entstaubtes Rohmühlenabgas aus der Abgasrohrleitung auf der Druckseite eines dem Abgasschornstein vorgeschalteten oder dem Abgasschomstein-Abgasventilators entnommen und zum Primärluftventilator des Drehofens geleitet.

Das Abgas hat in beiden Betriebsarten einen verminderten Sauerstoffgehalt und trägt dadurch zur Verminderung des Hochtemperatur-NOₓ im Drehofen bei.

Bei Direktbetrieb wird das Heißgas des Rohmehlvorwärmers gekühlt und direkt zum Abgasfilter und dann ins Freie geführt. Direktbetrieb ist notwendig, wenn die Rohmühle nicht in Betrieb ist, z.B. wegen Wartung oder Reparatur oder weil die Rohmehlsilos voll sind.

Im Verbundbetrieb arbeiten die Drehofenanlage und die Rohmühle im Gasverbund. Das Heißgas des Rohmehlvorwärmers strömt dabei zwecks Mahltrocknung der Rohstoffe durch die Rohmühle und dann durch den Abgasfilter ins Freie. Der Verbundbetrieb macht bis 95% und mehr der Betriebszeit aus.

Das Abgas hat je nach Betriebsart unterschiedliche Temperaturen und O₂ Gehalte, z.B. im Direktbetrieb 180 °C und 6 Vol. % O₂ und im Verbundbetrieb 90 °C und 16 Vol. % O₂.

Die Versorgung des Drehofenbrenners mit Abgas erfolgt vorzugsweise durch zwei in Reihe geschaltete Ventilatoren. Ein auf Saugbetrieb ausgelegter Ventilator saugt das Abgas aus dem Abgasschornstein an. Ein zweiter auf Druckbetrieb ausgelegter Ventilator drückt dann das Abgas in den Drehofenbrenner. An der Verbindungsrohrleitung zwischen beiden Ventilatoren befindet sich vorzugsweise eine motorbetätigte Frischluftklappe. Durch Ansaugen von Frischluft wird bei Direktbetrieb der O₂-Gehalt des zum Drehofenbrenner geführten Abgases auf einen bestimmten Sollwert erhöht, z.B. 15 bis 17 Vol. % O₂.

Vorzugsweise wird das Rohmehl in einem Kalzinator vorkalziniert, bevor es im Drehofen restkalziniert wird, und werden die Abgase des Drehofens dem Kalzinator zugeführt, dessen Abgase dann dem Rohmehlvorwärmer zugeführt werden. Zur NOₓ-Reduzierung ist der Kalzinator vorzugsweise ein Behälter- oder Kompakt-Kalzinator gemäß der gleichzeitig eingereichten Internationalen Patentanmeldung WO 2007/104787 "Kalzinator und dessen Verwendung". Bei einem solchen Kalzinator wird der Brennstoff in zwei Chargen zugegeben, die zuerst hintereinander unterstöchiometrisch verbrannt werden, und danach im gleichen Behälter gemeinsam vollständig verbrannt werden. Die Tertiärluftzufuhr erfolgt durch eine geteilte Rohrleitung an zwei Stellen des Behälter- bzw. Kompakt-Kalzinators. Der Kalzinator ist dabei in drei übereinander liegende Reaktionszonen aufgeteilt. In der unteren Reaktionszone werden der erste Teil des Kalzinator-Brennstoffes und der erste Teil des Rohmehls aufgegeben. Der Brennstoff wird mit Hilfe des Sauerstoffes des Ofenabgases unterstöchiometrisch verbrannt. Das Rohmehl wird teilkalziniert. Das Abgas der unteren Reaktionszone strömt dann nach oben in die mittlere Reaktionszone, wo der zweite Teil des Brennstoffes, der zweite Teil des Rohrmehls und der erste Teil der Tertiärluft zugegeben werden. Dieser Teil der Tertiärluft ist so bemessen, dass der zweite Teil des Brennstoffes wiederum unterstöchiometrisch verbrennt. Im mittleren Reaktionsbereich erfolgt eine weitere Teilkalzinierung des Rohmehls. Vorzugsweise wird der zweite Teil des Rohmehls dem ersten Teil der Tertiärluft aufgegeben, bevor diese in den Behälter eintritt.

### Kurze Beschreibung der Zeichnungen

Ein Ausführungsbeispiel der Erfindung wird nachfolgend anhand der Zeichnung näher erläutert. Es zeigen:

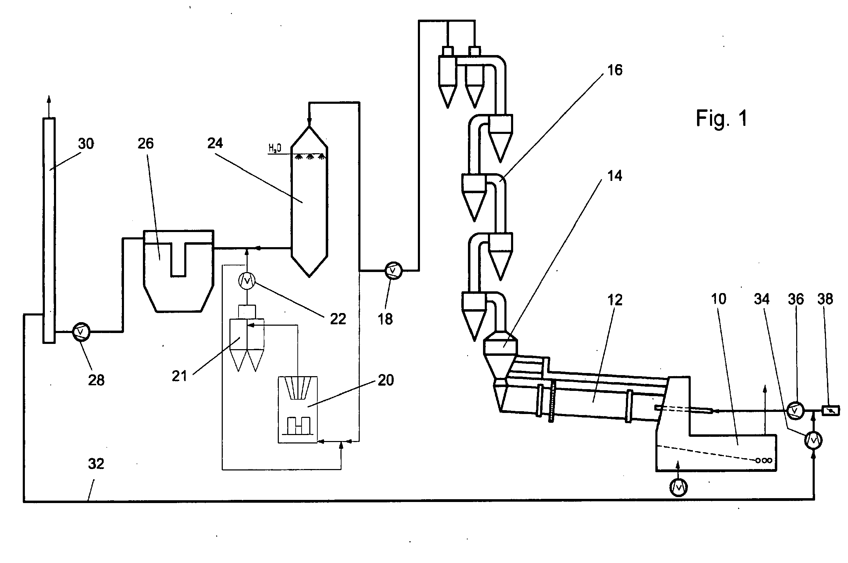

Fig. 1 in einer schematischen Darstellung eine Anlage zur Herstellung von Zementklinker aus Zementrohmehl, wobei die Arbeitsweise des Direktbetriebes dargestellt ist, und

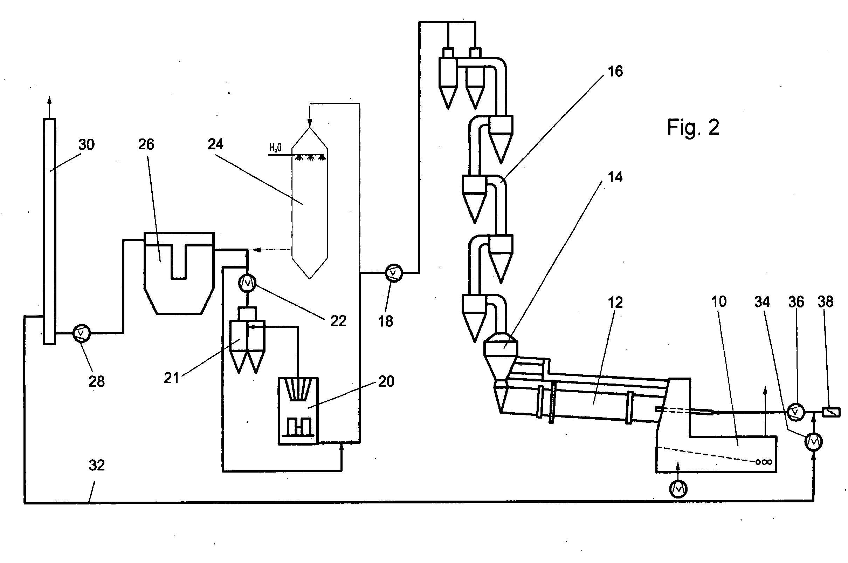

Fig. 2 die Anlage von Fig. 1, wobei die Arbeitsweise des Verbundbetriebes dargestellt ist.

### Weg(e) zur Ausführung der Erfindung

Die Figuren zeigen schematisch eine Anlage zur Herstellung von Zementklinker aus Zementrohmehl im Trockenverfahren. Die Anlage weist einen Rostkühler 10, einen Drehofen 12, einen Kalzinator 14, einen Rohmehlvorwärmer 16, einen Heißgasventilator 18, eine Rohmühle 20 mit einem nachgeschalteten Sichter 21 und einem Mühlenventilator 22, einen Gaskühler oder Kühlturm 24, einen Abgasfilter 26, einen Abgasventilator 28 und schließlich einen Abgasschornstein 30 auf. Der Rohmehlvorwärmer 16 kann in der üblichen Weise aus einem mehrstufigen Zyklon-Wärmetauscher und einem Kalzinator bestehen. Der Gaskühler 24 ist parallel zur Rohmühle 20 und dem Mühlenventilator 22 geschaltet.

Die Gase durchströmen den Rostkühler 10, den Drehofen 12, den Kalzinator 14 und den Rohmehlvorwärmer 16 in der üblichen Weise. Nach dem Passieren des Heißgasventilators 18 können die Abgase jedoch wahlweise über die Rohmühle 20 und den Mühlenventilator 22 oder über den Kühlturm 24 geleitet werden. Das Rohmehl wird wie üblich der Steigleitung der obersten oder zweitobersten Stufe des Rohmehlvorwärmers 16 aufgegeben, bewegt sich von oben nach unten durch den Rohmehlvorwärmer 16, den Kalzinator 14, gelangt in den Drehofen 12, wird dort zu Zementklinker gebrannt und schließlich im Rostkühler abgekühlt. Wegen der Einzelheiten des Kalzinators 14 wird auf die gleichzeitig eingereichte Internationale Patentanmeldung "Kalzinator und dessen Verwendung" wo 2007/104787 verwiesen. In den Figuren ist der Weg des Zementrohmehls und des Zementklinkers nicht dargestellt.

Von dem Abgasschornstein 30 zweigt eine Leitung 32 ab, die über einen Saugventilator 34 und einen Druckventilator 36 zum Brenner des Drehofens 12 führt. Dadurch kann Abgas aus dem Schornstein 30 als Primärluft dem Brenner des Drehofens 12 zugeführt werden. Das Abgas enthält relativ wenig Sauerstoff. Dadurch erhält die Drehofenflamme weniger Sauerstoff, als wenn Umgebungsluft als Primärluft eingesetzt wird. Dadurch wird wiederum die Bildung von N0ₓ reduziert. Gleichzeitig wird dadurch zwar in der Drehofenflamme mehr Kohlenmonoxid gebildet. Innerhalb der weiteren Verbrennungsstrecke, insbesondere innerhalb des Kalzinators, kann das Kohlenmonoxid jedoch vollständig ausbrennen. Durch die Frischluftklappe 38 können der Anteil des Abgases und der Anteil der Frischluft in der dem Brenner des Drehofens zugeführten Primärluft gesteuert werden.

Die Anlage kann in zwei Betriebsarten betrieben werden, nämlich im Verbundbetrieb und im Direktbetrieb:

Im Durchströmen des Rostkühlers 10, des Drehofens 12, des Kalzinators 14 und des Rohmehlvorwärmers 16 gibt es zwischen dem Verbundbetrieb und dem Direktbetrieb keinen relevanten Unterschied.

Im Verbundbetrieb strömt das Heißgas des Rohmehlvorwärmers 16 nach dem Heißgasventilator 18, durch die Rohmühle 20 und den nachgeschalteten Mühlenventilator 22, um dort den Rohstoff zu trocknen. Die Frischluftklappe 38, ist im Verbundbetrieb geschlossen, sodass der Brenner des Drehofens 12 als Primärluft nur das Abgas aus dem Abgasschornstein 30 erhält. Dieses hat z.B. eine Temperatur von etwa 90°C und einen Sauerstoffanteil von 16 Vol. %. Bis zu 95 % der Betriebszeit und mehr arbeitet die Anlage im Verbundbetrieb.

Im Direktbetrieb strömt das Heißgas des Rohmehlvorwärmers 16 nach dem Heißgasventilator 18 durch den Gaskühler 24 und wird von dort mittels des Abgasventilators 28 durch den Abgasfilter 26 gesaugt und in den Abgasschornstein 30 gedrückt. Über die Leitung 32 zieht der Saugventilator 34 auch im Direktbetrieb einen Teil des Abgases aus dem Abgasschornstein 30 ab.

Die Frischluftklappe 38 ist im Direktbetrieb jedoch so geöffnet, dass der Druckventilator 36 eine Mischung aus dem Abgas und Frischluft dem Brenner des Drehofens 12 zuführt. Im Direktbetrieb beträgt die Temperatur des Abgases im Abgasschornstein 30 z. B. etwa 180°C und der Sauerstoffanteil etwa 6 Vol. %. Auf Direktbetrieb wird umgeschaltet, wenn die Rohmehlmühle 20 zur Reinigung oder Reparatur außer Betrieb ist oder der Rohmehlsilo bereits voll ist.

Bezugszeichenliste:
- 10: Rostkühler
- 12: Drehofen
- 14: Kalzinator
- 16: Rohmehlvorwärmer
- 18: Heißgasventilator
- 20: Rohmühle
- 21: Sichter
- 22: Mühlenventilator
- 24: Gaskühler/Kühlturm
- 26: Abgasfilter
- 28: Abgasventilator
- 30: Abgasschornstein
- 32: Abgas/Primärluft-Leitung
- 34: Saugventilator
- 36: Druckventitator
- 38: Frischluftklappe

## Patentansprüche

1. Verfahren zur Herstellung von Zementklinker im Trockenverfahren, wobei der Rohstoff in einer Rohmühle (20) zu Zementrohmehl gemahlen wird, das Rohmehl in einem Rohmehlvorwärmer (16) vorgewärmt wird, das Heißmehl in einem Drehofen (12) kalziniert und zu Zementklinker gebrannt wird und der Zementklinker in einem Rostkühler (10) gekühlt wird, wobei die Abgase des Drehofens (12) dem Rohmehlvorwärmer (16) zugeführt werden und dem Drehofen (12) mittels eines Primärluftventilators (36) Primärluft zugeführt wird, wobei die Anlage in einem Verbundbetrieb mit Rohmehlmahlung und in einem Direktbetrieb ohne Rohmehlmahlung betreibbar ist, wobei im Verbundbetrieb der Drehofen (12), der Rohmehlvorwärmer (16) und die Rohmühle (20) im Gasverbund arbeiten, indem das Heißgas des Rohmehlvorwärmers (16) der Rohmühle (20) zugeführt wird und danach als Abgas durch einen Abgasschornstein (30) ins Freie abgegeben wird, ein Teil des Abgases dem Drehofen (12) als Primärluft zugeführt wird, der Drehofen (12) als Primärluft nur das Abgas aus dem Abgasschornstein (30) erhält und das zugeführte Abgas eine Temperatur von etwa 90°C und einen Sauerstoffanteil von 16 Vol. % aufweist, und wobei im Direktbetrieb das Heißgas des Rohmehlvorwärmers (16) an der Rohmühle (20) vorbei zum Abgasschornstein (30) geleitet wird ein Teil des Abgases zusammen mit Frischluft dem Drehofen (12) als Primärluft zugeführt wird und durch das Ansaugen von Frischluft der O₂-Gehalt des zum Drehofen geführten Abgases auf einen Wert von 15 bis 17 Vol. % erhöht wird.

2. Verfahren nach Anspruch 1, wobei das Rohmehl in einem Kalzinator (14) vorkalziniert wird, bevor es im Drehofen (12) restkalziniert wird, und die Abgase des Drehofens (12) dem Kalzinator (14) zugeführt werden, dessen Abgase dann dem Rohmehlvorwärmer (16) zugeführt werden.

3. Verfahren nach Anspruch 1 oder 2, wobei im Direktbetrieb das Heißgas des Rohmehlvorwärmers (16) durch einen Kühlturm oder Gaskühler (24) geführt wird.

4. Verfahren nach einem der Ansprüche 1 bis 3, wobei im Verbundbetrieb das Abgas des Rohmehlvorwärmers (16) zusammen mit Wasser aus der Rohstofftrocknung in der Rohmühle (20) und Rohmühlenfalschluft ins Freie abgegeben wird und davon der Teil entnommen wird, der als Primärluft dem Drehofen (12) zugeführt wird.

## Claims

1. Process for the production of cement clinker in a dry process, wherein the raw material is ground to cement raw meal in a raw mill (20), the raw meal is preheated in a raw meal preheater (16), the hot meal is calcined in a rotary kiln (12) and burnt to cement clinker and the cement clinker is cooled in a grate cooler (10), wherein the exhaust gases from the rotary kiln (12) are fed to the raw meal preheater (16) and primary air is fed to the rotary kiln (12) by means of a primary air ventilator (36), wherein the unit can be operated in a combined operation with raw meal grinding and in a direct operation without raw meal grinding, wherein in combined operation the rotary kiln (12), the raw meal preheater (16) and the raw mill (20) work in gas interconnection in that the hot gas from the raw meal preheater (16) is fed to the raw mill (20) and is then released into the atmosphere as exhaust gas through a flue gas chimney (30), part of the exhaust gas is fed to the rotary kiln (12) as primary air, the rotary kiln (12) receives only the exhaust gas from the flue gas chimney (30) as primary air and the fed exhaust gas has a temperature of approximately 90°C and an oxygen content of 16 vol. %, and wherein in direct operation the hot gas from the raw meal preheater (16) is conducted past the raw mill (20) to the flue gas chimney (30), part of the exhaust gas together with fresh air is fed to the rotary kiln (12) as primary air and, by sucking in fresh air, the O₂ content of the exhaust gas passed to the rotary kiln is increased to a value of 15 to 17 vol. %.

2. Process according to claim 1, wherein the raw meal is pre-calcined in a calciner (14) before residual calcination in the rotary kiln (12), and the exhaust gases from the rotary kiln (12) are fed to the calciner (14) the exhaust gases from which are then fed to the raw meal preheater (16).

3. Process according to claim 1 or 2, wherein in direct operation the hot gas from the raw meal preheater (16) is passed through a cooling tower or gas cooler (24).

4. Process according to one of claims 1 to 3, wherein in combined operation the exhaust gas from the raw meal preheater (16) together with water from the drying of the raw material in the raw mill (20) and raw mill secondary air is released into the atmosphere and from this is taken the part which is fed to the rotary kiln (12) as primary air.

## Revendications

1. Procédé de production de clinker de ciment par voie sèche, où la matière première est moulue dans un broyeur de farine crue (20) pour former une farine crue de ciment, la farine crue est préchauffée dans un dispositif pré-chauffeur de la farine crue (16), la farine chauffée est calcinée dans un four rotatif (12) et torréfiée pour obtenir du clinker de ciment et le clinker de ciment est refroidi dans un refroidisseur à grille (10), où les gaz s'échappant du four rotatif (12) sont acheminés vers le dispositif pré-chauffeur de la farine crue (16) et l'air primaire est acheminé vers le four rotatif (12) au moyen d'un ventilateur d'air primaire (36), où l'installation peut être exploitée dans un mode interconnecté comportant un broyage de la farine crue et dans un mode direct ne comportant pas de broyage de la farine crue, où dans le cadre du mode d'exploitation interconnecté le four rotatif (12), le dispositif pré-chauffeur de la farine crue (16) et le broyeur de farine crue (20) fonctionnent en interconnexion gazeuse, les gaz chauds provenant du dispositif pré-chauffeur de la farine crue (16) étant acheminés vers le broyeur de farine crue (20) puis évacués à l'air libre sous forme de gaz d'échappement sortant d'une cheminée d'évacuation (30), une partie du gaz d'échappement est acheminée vers le four rotatif (12) sous forme d'air primaire, le four rotatif (12) ne contenant comme air primaire que le gaz d'échappement provenant de la cheminée d'évacuation (30) et le gaz ainsi acheminé présente une température d'environ 90°C et une teneur en oxygène de 16% en volume, et où dans le cadre du mode d'exploitation direct le gaz chaud provenant du dispositif pré-chauffeur de la farine crue (16) est acheminé vers la cheminée d'évacuation (30) en évitant le broyeur de farine crue (20), une partie du gaz d'échappement étant acheminée avec de l'air frais vers le four rotatif (12) sous forme d'air primaire et l'aspiration d'air frais permettant d'augmenter la teneur en O₂ du gaz d'échappement acheminé vers le four rotatif à une valeur allant de 15 jusqu'à 17% en volume.

2. Procédé selon la revendication 1, où la farine crue est pré-calcinée dans un dispositif calcinateur (14) avant une calcination complète dans le four rotatif (12), et les gaz d'échappement du four rotatif (12) sont acheminés vers le calcinateur (14) dont les gaz d'échappement sont ensuite acheminés vers le dispositif pré-chauffeur de la farine crue (16).

3. Procédé selon la revendication 1 ou 2, où dans le cadre du mode d'exploitation direct le gaz chaud du dispositif pré-chauffeur de la farine crue (16) est passé à travers une tour de refroidissement ou un refroidisseur de gaz (24).

4. Procédé selon une des revendications 1 à 3, où dans le cadre du mode d'exploitation interconnecté le gaz d'échappement du dispositif pré-chauffeur de la farine crue (16) est évacué à l'air libre avec l'eau provenant du séchage des matières premières dans le broyeur de farine crue (20) et du faux tirage du broyeur de farine crue, une partie étant récupérée pour être acheminée comme air primaire vers le four rotatif (12).
